# EUROPEAN PATENT APPLICATION

(11) **EP 4 733 119 A1**
(43) Date of publication of application: **29.04.2026**
(21) Application number: 25210490.6
(22) Date of filing: 22.10.2025
(51) Int. Cl.: B60L 3/00, B60L 7/00, B60L 15/02, B60L 15/08, B60L 15/28, B60L 15/20, H02P 3/22

(54) **CONTROL STRATEGY OF ELECTRIC MOTORS OF ELECTRIC TRACTION SYSTEMS**

(30) Priority: 23.10.2024 IT 202400023664
(71) Applicant: C.R.F. Società Consortile per Azioni, 10043 Orbassano (TO) (IT)
(72) Inventor: ALLOCCO, Alessandro, 10043 ORBASSANO (TO) (IT); BELHADI, M'Hamed, 10043 ORBASSANO (TO) (IT); GIMET, Eric, 10043 ORBASSANO (TO) (IT); KIM, Jay, 10043 ORBASSANO (TO) (IT); MAVALANKAR, Dru, 10043 ORBASSANO (TO) (IT); RAVELLO, Vittorio, 10043 ORBASSANO (TO) (IT); VINCENT, Deepa, 10043 ORBASSANO (TO) (IT)
(74) Representative: Studio Torta S.p.A.

(57) **Abstract**

A vehicular control system (**1**) for an electric traction system (**ET**) of a vehicle (**V**) with electric or hybrid propulsion, the vehicle (**V**) with electric or hybrid propulsion comprises a vehicular powertrain (**GM**) comprising the electric traction system (**ET**) and a transmission system (**T**) interposed between the electric traction system (**ET**) and driving wheels (**W**) of the vehicle with electric or hybrid propulsion (**V**). The electric traction system (**ET**) comprises at least one multiphase electric motor (**ME**) and is electronically controllable to selectively operate in different operating modes comprising at least one electric mode, wherein the vehicle (**V**) with electric or hybrid propulsion is propelled by the electric motor (**ME**). The vehicular control system (**1**) is designed to determine (**10**) the presence of a possible critical condition of the electric traction (**ET**) system of the vehicle (**V**) with electric or hybrid propulsion; in case a possible critical condition of the electric traction system (**ET**) of the vehicle (**V**) with electric or hybrid propulsion is determined to be present, inhibit (**11**) first phases of the electric motor (**ME**) of the vehicle (**V**) with electric or hybrid propulsion; verify (**12**) that the position of a rotor of the electric motor (**ME**) of the vehicle (**V**) with electric or hybrid propulsion meets a proprietary criterion; and if the position of a rotor of the electric motor (**ME**) of the vehicle (**V**) with electric or hybrid propulsion meets the proprietary criterion, inhibit (**13**) the remaining second phases of the electric motor (**ME**) of the vehicle (**V**) with electric or hybrid propulsion.

## Description

### CROSS-REFERENCE TO RELATED APPLICATIONS

This patent application claims priority from Italian patent application no. 102024000023664 filed on October 23, 2024, the entire disclosure of which is incorporated herein by reference.

### TECHNICAL FIELD OF THE INVENTION

This invention relates in general to the field of fault protection, in particular to fault protection in an electric traction system of a vehicle with electric or hybrid propulsion.

This invention generally relates to the vehicles' sector, whether the vehicles are equipped with an electric motor only or with hybrid propulsion, that is, equipped with an internal combustion engine and an electric motor. In particular, and without any loss of generality, this invention relates to vehicles with electric or hybrid propulsion wherein the electric traction system comprises an electric motor, herein permanent a Permanent Magnet Synchronous Motor (PMSM) and an inverter circuit, the latter interposed between a power supply system of the vehicle with electric or hybrid propulsion and the permanent magnet synchronous motor.

This invention relates to a vehicular control system and a computer program product or software for an electric traction system, in particular an electric motor, even more specifically a permanent magnet synchronous motor, of a vehicle with electric or hybrid propulsion to implement fault protection.

This invention finds application in any type of road motor vehicle, whether it is used to transport people, such as a car, a bus, a camper van, etc., or to transport goods, such as an industrial vehicle (a truck, lorry, articulated vehicle, etc.) or a light or medium-heavy commercial vehicle (a van, covered body vehicle, cabin cruiser, etc.).

### PRIOR ART

As is known, in the event of a fault in the electric motor in the electric traction system or, more generally, when the electric motor of the vehicle with electric or hybrid propulsion cannot be controlled and the speed of the electric motor (in particular, the rotation speed of the rotor of the electric motor) is greater than a threshold value, a vehicular control system of the vehicle with electric or hybrid propulsion is designed to implement a protection strategy, known as an Active Short Circuit (ASC). In particular, according to the abovementioned strategy, it is possible to interrupt the operation of the electric motor while protecting the power supply system, here a battery, and the other components of the vehicle, for example the electric motor, electronic components (for example inverter circuits), from any further, more impactful failures of the vehicle with electric or hybrid propulsion; in addition, the abovementioned strategy also makes it possible to implement control over the traction system of the vehicle with electric or hybrid propulsion, preventing the generation of uncontrolled torque and, thus, ensuring the safety of the passengers of the vehicle with electric or hybrid propulsion. It should be noted that the abovementioned strategy is especially applicable to Permanent Magnet Synchronous Motors (PMSM), for example three-phase or multi-phase ones.

In particular, the ASC protection strategy, implemented by a vehicular control system of the abovementioned vehicle with electric or hybrid propulsion, provides the following steps:
- determining the presence of a potential critical condition of the electric traction system, in particular the presence of a fault, for example in one of the components of the vehicle with electric or hybrid propulsion, or a situation wherein the electric motor cannot be controlled and the speed of the electric motor is greater than a threshold value;
- if a potential critical condition is determined to be present, implementing the protection strategy, in particular by short-circuiting the electric motor to the positive terminal or negative terminal of the power supply system of the vehicle with electric or hybrid propulsion (in particular, a battery of the vehicle with electric or hybrid propulsion), or creating a short circuit between the power supply system and the electric motor of the vehicle with electric or hybrid propulsion, so as to prevent this critical situation from affecting other components of the electric traction system of the vehicle with electric or hybrid propulsion.

In this way, the vehicular control system establishes a controlled coasting path for the electric current induced by the electromotive force of the electric motor's permanent magnets.

### SUBJECT AND SUMMARY OF THE INVENTION

The Applicant has been able to observe that the known solutions could be improved.

In detail, the Applicant notes that the activation of the abovementioned ASC protection strategy causes a transient of electric current in the phases of the electric motor with high peaks depending on the operating point of the electric traction system. More specifically, the permanent magnets of the electric motor are sized based on the maximum peak value of the electric current flowing through the electric traction system in such a way as to ensure that magnets are not demagnetised during the abovementioned ASC protection strategy. This means that the permanent magnets must be able to withstand even non-negligible, specifically high electric currents. Therefore, the Applicant notes that, in light of the above, problems may arise with regard to the oversizing of the permanent magnets as well as with regard to their production costs.

In addition, the Applicant notes that, according to the ASC protection strategy described above, high braking torque is generated due to high electric phase currents, thus leading to possible problems with deterioration of the electric traction system components and non-negligible negative effects on the dynamics and safety of the vehicle with electric or hybrid propulsion.

The purpose of this invention is, thus, to provide a vehicular control system and a computer program product or software for an electric traction system, in particular an electric motor, even more specifically a permanent magnet synchronous motor, of a vehicle with electric or hybrid propulsion that can at least partially solve the problems that negatively affect the prior art solutions.

According to this invention, a vehicular control system and a computer program product or software for an electric traction system, in particular an electric motor, even more specifically a permanent magnet synchronous motor, of a vehicle with electric or hybrid propulsion are provided as claimed in the attached claims.

### BRIEF DESCRIPTION OF THE DRAWINGS

Figure 1 schematically shows a vehicular control system for a vehicle with electric or hybrid propulsion.
Figure 2 shows a flowchart of a method implemented by a vehicular control system according to the present invention.
Figure 3 shows the development of electric phase currents when implementing known methods and when implementing a method implemented by a vehicular control system according to the present invention.
Figure 4 shows temporal trends of quantities relating to an electric traction system of a vehicle with electric or hybrid propulsion when implementing known methods and when implementing a method implemented by a vehicular control system according to the present invention.

### DESCRIPTION OF PREFERRED EMBODIMENTS OF THE INVENTION

The present invention will now be described in detail with reference to the attached figures in order to allow a skilled person to implement it and use it. Various modifications to the described embodiments will be readily apparent to those skilled in the art and the general principles described may be applied to other embodiments and applications without however departing from the protective scope of the present invention as defined in the attached claims. Therefore, this invention should not be regarded as limited to the embodiments described and illustrated herein but should be allowed the broadest protection scope consistent with the features described and claimed herein.

Unless otherwise defined, all technical and scientific terms used herein have the same meaning commonly understood by one of ordinary skill in the art to which the invention belongs. In case of conflict, the present specification, including the definitions provided, will control. In addition, the examples are provided purely for illustrative purposes and, as such, must not be considered as limiting.

In particular, the block diagrams included in the attached figures and described below are not to be understood as a representation of the structural features, i.e. construction restrictions, but must be understood as a representation of functional features, i.e. intrinsic properties of the devices defined by the effects obtained, that is to say functional restrictions, which can be implemented in different ways, so as to protect the functionalities thereof (operational capability).

In order to facilitate the understanding of the embodiments described herein, reference will be made to some specific embodiments and a specific language will be used to describe the same. The terminology used herein is used for the purpose of describing particular embodiments only and is not intended to limit the scope of this invention.

In summary, the present vehicular control system is designed to implement an ASC-based control method that aims to reduce the peak electric current during the transient short-circuit phase of the electric motor, here a permanent magnet synchronous one that has, in particular, three phases, on the power supply system of the vehicle with electric or hybrid propulsion, thereby minimising the size and/or composition of the permanent magnets, for example by reducing their total size and/or reducing the presence of rare earths in them. This method is applicable to any electric traction system using permanent magnet synchronous electric motors in particular, specifically any inverter and any critical situation. In addition, as the following description will also make clear, the vehicular control system according to this invention implements a method that is advantageous to apply even under any operating conditions, for example at zero, low or high torque/speed values.

As also described in more detail below, this invention enables the implementation of a first, two-phase short-circuit phase, that is, two phases of the electric motor are short-circuited on the power supply system of the vehicle with electric or hybrid propulsion, and, thereafter, a second three-phase short-circuit phase depending on the angular position of the rotor of the electric motor. These protect the components of the electric traction system of the vehicle with electric or hybrid propulsion from possible faults, while mitigating any electric current peaks that may arise in the transient during the closing of the electric motor phases.

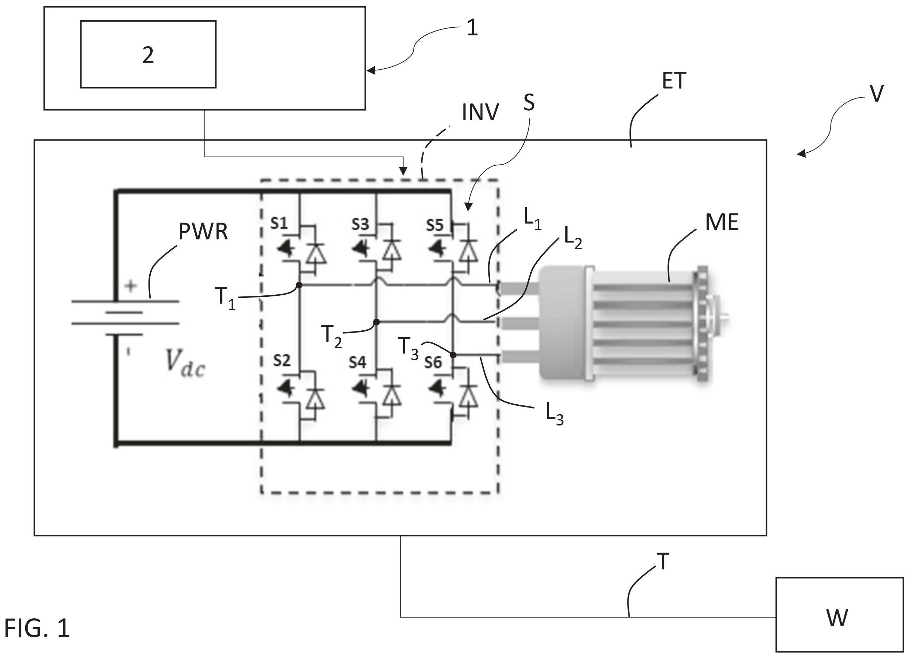

Figure 1 shows a vehicle **V** with electric or hybrid propulsion comprising a vehicular powertrain **GM** comprising, in turn, an electric traction system **ET** and a transmission system **T** interposed between the electric traction system **ET** and driving wheels **W** of the vehicle **V** with electric or hybrid propulsion. More specifically, the electric traction system **ET** comprises at least one multiphase electric motor **ME**, here a three-phase synchronous permanent magnet motor, and can be electronically controlled to selectively operate in different operating modes comprising at least one electric mode, wherein the vehicle **V** with electric or hybrid propulsion is propelled by the electric motor **ME**. It should be noted that, in the case of a vehicle **V** with hybrid propulsion, the latter also comprises an internal combustion or thermal engine (not shown) and the electric traction system **ET** is electronically controllable to selectively operate in different operating modes comprising:
- an electric mode, in which the vehicle **V** with hybrid propulsion is propelled by the electric motor **ME** alone; and
- a hybrid mode, in which the vehicle **V** with hybrid propulsion is propelled by the internal combustion engine **MT**, possibly assisted by the electric motor **ME** under certain operating conditions of the vehicle **V** with hybrid propulsion.

In the following, reference is made to vehicle **V** with electric propulsione without any loss of generality. The following considerations are also considered to be valid for a vehicle **V** with hybrid propulsion.

The electric traction system **ET** also comprises:
- a power supply system **PWR**, here a battery system of the vehicle **V** with electric or hybrid propulsion, to power the vehicle **V** with electric or hybrid propulsion; and
- an inverter circuit **INV** interposed between the electric motor **ME** and the power system **PWR** and designed to convert direct currents (DC) from the power system **PWR** into alternate currents (AC) to be supplied to the electric motor **ME** for its operation.

In particular, the inverter circuit **INV** comprises multiple switches **S** each designed to switch between a first operating position, wherein the power system **PWR** and the electric motor **ME** are connected to each other, that is, the switches **S** are open, in particular at least one terminal of the power system **PWR**, and a second operating position, in which the power system **PWR** and the electric motor **ME** are disconnected from each other, that is, at least part of the switches S are closed. More specifically, the multiple switches **S** comprise:
- first switches **S1, S3, S5** designed to connect a positive terminal of the power system **PWR** to the electric motor **ME,** in particular when in the first operating position; and
- second switches **S2, S4, S6** designed to connect a negative terminal of the power system **PWR** to the electric motor **ME**, in particular when in the first operating position.

In particular, the switches **S1-S6** here are Metal-Oxide-Semiconductor Field Effect Transistors (MOSFET). In addition, the switches **S1-S6** are arranged in such a way that the switches **S1, S3** and **S5** are arranged in parallel with each other and are connected at their respective first terminals to the positive terminal of the power supply system **PWR** and that the switches **S2, S4** and **S6** are arranged in parallel with each other and are connected at their respective first terminals to the negative terminal of the power system **PWR.** In addition, the pairs of switches **S1-S2, S3-S4** and **S5-S6** are connected to each other at their respective second terminals.

Furthermore, as also shown in Figure 1, the electric motor **ME** is connected by means of three connection lines **L1-L3** and respective three connection terminals **T1-T3** to the inverter circuit **INV,** in particular so that the connection terminals **T1-T3** are respectively interposed between the pairs of switches **S1-S2, S3-S4** and **S5-S6.** In other words, the electric motor **ME** is connected to the inverter circuit **INV** so that it is essentially in parallel with the latter.

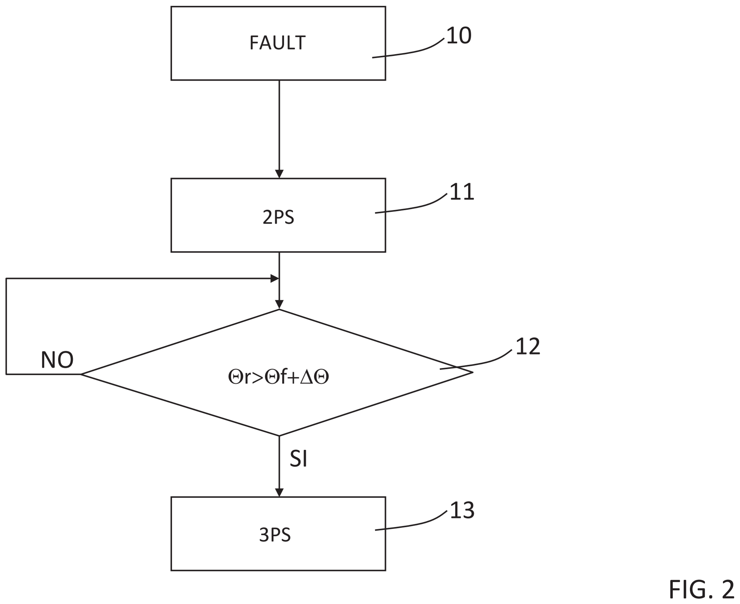

With joint reference to Figures 1 and 2, this invention relates to a vehicular control system **1** and is designed for:
- determining (block **10**)the presence of a possible critical condition of the electric traction system **ET,** in particular of the electric motor **ME,** of the vehicle **V** with electric or hybrid propulsion;
- in case a possible critical condition of the electric traction system **ET** of the vehicle **V** with electric or hybrid propulsion is determined to be present, inhibiting (block **11**) first phases, two in this case, of the electric motor **ME** of the vehicle **V** with electric or hybrid propulsion, also referred to below as "two-phase short" (2PS);
- verifying (block **12**) that the position of a rotor of the electric motor **ME** of the vehicle V with electric or hybrid propulsion meets a proprietary criterion; and
- if the position of a rotor of the electric motor **ME** of the vehicle **V** with electric or hybrid propulsion meets the proprietary criterion, inhibiting (block **13**) the remaining second phases, the third phase in this case, of the electric motor **ME** of the vehicle **V** with electric or hybrid propulsion, also referred to below as "three-phase short" (3PS).

In order to verify that the position of the rotor of the electric motor **ME** meets the proprietary criterion, the vehicular control system **1** is designed to verify that the angular position **Θᵣ** of the rotor of the electric motor **ME** is greater than the sum of the angular position **Θ_{f}** of the rotor of the electric motor **ME** when a possible critical condition and a predefined angular distance **ΔΘ** _{are detected,} the latter being representative of the rotation of the rotor of the electric motor **ME** between the angular position assumed at the onset of the possible critical condition and the angular position assumed at the inhibition of the third phase of the electric motor **ME.** In particular, the predefined angular distance **ΔΘ** ranges between 90° and 180°.

In addition, according to one aspect of this invention, in order to inhibit the first phases of the electric motor **ME,** the vehicular control system **1** is designed to short-circuit two phases of the electric motor **ME** by alternately switching two among the first switches **S1, S3, S5** and the second switches **S2, S4, S6** from the first operating position to the second operating position. Therefore, the vehicular control system **1** is designed to short-circuit the electric motor **ME** on the power system **PWR** of the vehicle **V** with electric or hybrid propulsion to either the positive terminal or the negative terminal of the power system **PWR.**

In order to inhibit the first phases of the electric motor **ME**, the vehicular control system **1** is designed to short-circuit the first phases of the electric motor **ME** by alternately switching one among the first switches **S1**, **S3**, **and S5** and the second switches **S2**, **S4**, and **S6** from the first operating position to the second operating position.

An operating mode of this vehicular control system **1** will now be described with reference to Figures 1-4.

In particular, for all those situations in which it is not possible to control the electric motor **ME** with permanent magnets, for example due to a fault occurring while driving in electric mode, the present vehicular control system **1** is designed to implement the above-mentioned strategy, described with reference to Figure 2, according to which two phases of the electric motor **ME** are first short-circuited (whether upper, that is, towards the positive terminal of the power system **PWR** of the vehicle **V** with electric or hybrid propulsion, or lower, that is, towards the negative terminal of the power system **PWR** of the vehicle **V** with electric or hybrid propulsion), that is, two of the switches **S1**, **S3** and **S5** or **S2**, **S4** and **S6** are switched to close, that is, to assume the second operating position. Subsequently, the third switch between the remaining switches **S1**, **S3** and **S5** or **S2**, **S4** and **S6** is closed following a predefined rotation of the rotor of the electric motor **ME**.

Therefore, there are six possible configurations applicable for switching the above-mentioned switches **S1-S6**, which are schematised in the following table (Table 1):

**Table 1**

| **Θ_{f}**. | **2PS** | **3PS** |
|---|---|---|
| 1°-60° | S1, S5 | S1, S3, S5 |
| 61°-120° | S4, S6 | S2, S4, S6 |
| 121°-180° | S1, S3 | S1, S3, S5 |
| 181°-240° | S2, S6 | S2, S4, S6 |
| 241°-300° | S3, S5 | S1, S3, S5 |
| 301°-360° | S2, S4 | S2, S4, S6 |

In other words, the closing sequence of the switches **S1-S6** varies as a function of the angular position **Θ_{f}** of the rotor of the electric motor **ME** when a possible critical condition is detected.

As mentioned above, the application of different configurations depends on the angular position of the rotor of the electric motor **ME** ; consequently, depending on the angular position of the rotor of the electric motor **ME**, there is a configuration that provides the minimum value of peak phase current reduction. More specifically, the selection of the optimal configuration and the value of the predefined angular distance **ΔΘ** depends on the load conditions before the possible critical condition occurs and the position of the rotor of the electric motor **ME** when the possible critical condition occurs.

It should be noted that, in the worst possible case, there is a load condition that causes the maximum peak phase electric current to occur. Consequently, a base speed of the rotor of the electric motor **ME** and a consequent optimal configuration are defined as a function of the angular position **Θ_{f}** of the rotor of the electric motor **ME** when a possible critical condition is detected, as shown in Table 1.

Therefore, as mentioned above, this vehicular control system **1**, starting from the angular position of the rotor of the electric motor **ME**, enables the implementation of the above-mentioned 3PS protection strategy, in order to handle any critical conditions.

According to one aspect of this invention, the vehicular control system **1** comprises a sensory system **2** designed to detect the angular position of the rotor of the electric motor **ME** of the vehicle **V** with electric or hybrid propulsion. It should be noted that, if the sensory system **2** is right and, therefore, the angular position of the rotor of the electric motor **ME** cannot be determined via it, the vehicular control system **1** is designed to either employ an external position detection device (not shown) or estimate the position of the rotor of the electric motor **ME** as a result of determining the potential critical condition considering that the speed variation of the same rotor of the electric motor **ME** in a first half revolution of the same electric motor **ME** after determination of the potential critical condition is negligible.

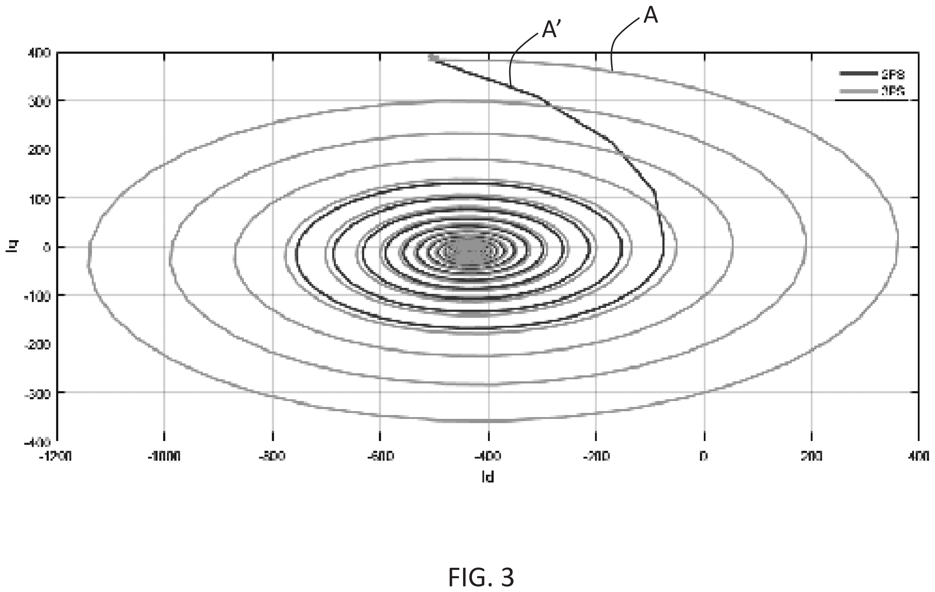

In addition to the above, the predefined angular distance **ΔΘ** is a range of values, specifically 90°, so that the effect of any estimates of the angular position of the rotor of the electric motor **ME** is limited. By way of example, Figure 3 shows the effects on the phase electric currents Id, Iq, in particular three-phase, shown in a diagram dq, in the case of immediate application of the 3PS protection strategy (indicated by reference **A**) according to the prior art and first of the application of the 2PS protection strategy (indicated by reference **A'**) according to this invention. In this case, the Applicant has observed that, under the same initial conditions of maximum load and base speed (that is, in the worst case possible), the 2PS protection strategy according to this invention results in a three-phase electric current with a lower peak at the beginning than the 3PS protection strategy according to the prior art.

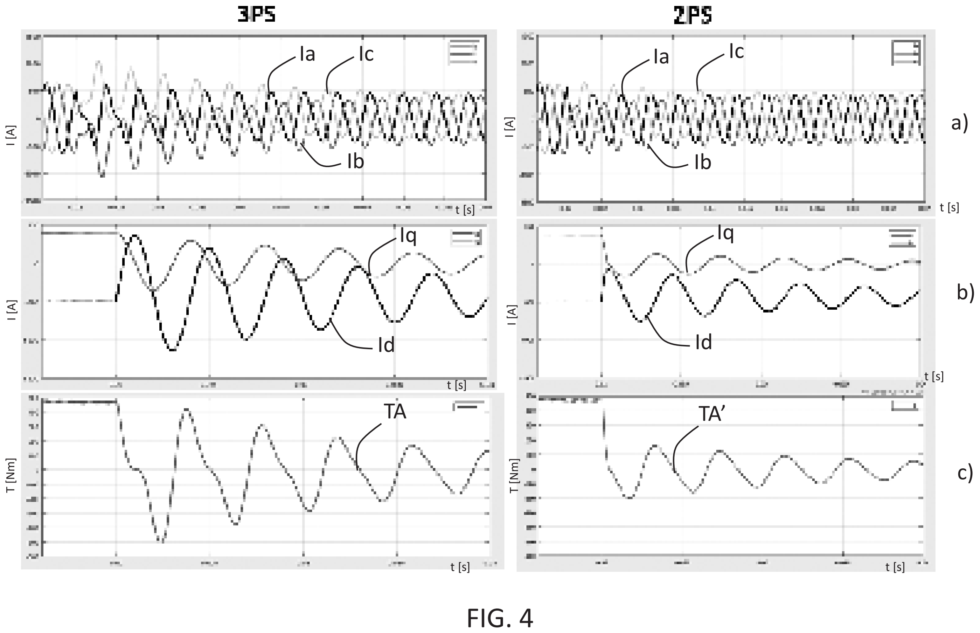

With reference to Figure 4, the Applicant has observed that the application of the protection strategy implemented by the vehicular control system **1** according to this invention results in a non-negligible variation on the phase electric currents, peak phase electric currents and the torque applied by the electric motor **ME**. In particular, the Applicant noted that there is:
- a minimisation of the peak electric current and phase electric current (Figures 4b) and 4a) respectively), indicated with Ia, Ib, Ic, during the active short-circuit transient phase of the electric motor **ME**, considered the worst case possible, by up to 35%;
- a minimisation of the braking torque (Figure 4c), in which the known 3PS protection strategy is indicated with the reference **TA** and the 2PS protection strategy according to this invention is indicated by the reference **TA'**) during the active short-circuit transient phase of the electric motor **ME**, considered the worst case possible, by up to 60%; and
- a minimisation of the size/composition (specifically, percentage of rare earths) of the permanent magnets of the electric motor **ME**, considered the worst case possible, by up to 14%.

In particular, Figure 4b) represents the phase electric currents in diagram dq shown on a time scale. Thus, the Applicant has observed that the above-mentioned minimisation for phase electric currents, in particular of the electric current on the axis d (identified as the axis of the magnets), shown as Id in Figure 4b), enables optimisation of the sizing process of the permanent magnets and, thus, at least partial resolution of the above-mentioned problems of the prior art.

On the basis of what has been described, the benefits made possible by this invention are evident.

In particular, the present vehicular control system makes it possible to solve at least some of the problems of the prior art, namely:
- minimising the effects of the high electric current during the transient established by short-circuiting the electric motor, in particular by gradually short-circuiting the electric motor, first in two phases and, following a predefined rotation of the electric motor rotor, in three phases, thus preserving the integrity of the electric traction system of the vehicle with electric or hybrid propulsion;
- as a result of the reduction in peak phase electric current, the sizing of the electric motor's permanent magnets is such that lower peak phase electric current values are taken into account, resulting in a reduction in the size of the permanent magnets themselves and thus their cost;
- a reduction/elimination of the use of rare earths to produce permanent magnets, as it is no longer necessary to size them to withstand high peak phase electric currents and, thus, there is a reduction in the production costs of the permanent magnets themselves; and
- improve the Life Cycle Assessment (LCA) of the vehicle with electric or hybrid propulsion, as the reduction in the use of rare earths or the use of less valuable earths for constructing the permanent magnets makes it possible to improve the above assessment.

## Claims

1. A vehicular control system (**1**) for an electric traction system (**ET**) of a vehicle (**V**) with electric or hybrid propulsion, the vehicle with electric or hybrid propulsion comprises a vehicular powertrain (**GM**) comprising the electric traction system (**ET**) and a transmission system (**T**) interposed between the electric traction system (**ET**) and driving wheels (**W**) of the vehicle with electric or hybrid propulsion (**V**);
the electric traction system (**ET**) comprises at least one multiphase electric motor (**ME**) and is electronically controllable to selectively operate in different operating modes comprising at least one electric mode, wherein the vehicle (**V**) with electric or hybrid propulsion is propelled by the electric motor (**ME**),
the vehicular control system (**1**) is designed to:
- determine (**10**) the presence of a possible critical condition of the electric traction (**ET**) system of the vehicle (**V**) with electric or hybrid propulsion;
- in case a possible critical condition of the electric traction system (**ET**) of the vehicle (**V**) with electric or hybrid propulsion is determined to be present, inhibit (**11**) first phases of the electric motor (**ME**) of the vehicle (**V**) with electric or hybrid propulsion;
- verify (**12**) that the position of a rotor of the electric motor (**ME**) of the vehicle (**V**) with electric or hybrid propulsion meets a proprietary criterion; and
- if the position of a rotor of the electric motor (**ME**) of the vehicle (**V**) with electric or hybrid propulsion meets the proprietary criterion, inhibit (**13**) the remaining second phases of the electric motor (**ME**) of the vehicle (**V**) with electric or hybrid propulsion.

2. The vehicular control system (**1**) according to claim 1, wherein, in order to verify (**12**) that the position of a rotor of the electric motor (**ME**) of the vehicle (**V**) with electric or hybrid propulsion meets the proprietary criterion, the vehicular control system (**1**) is designed to verify that the angular position (**Θ**ᵣ) of the rotor of the electric motor (**ME**) is greater than the sum of the angular position (**Θ_{f}**) of the rotor of the electric motor (**ME**) at the time of detecting a possible critical condition and a predefined angular distance (**ΔΘ**).

3. The vehicular control system (1) according to claim 2, wherein the predefined angular distance (ΔΘ) is between 90° and 180°.

4. The vehicular control system (1) according to any one of the preceding claims, wherein the electric traction system (ET) further comprises:
- a power supply system (PWR) to power the vehicle (V) with electric or hybrid propulsion; and
- an inverter circuit (INV) interposed between the electric motor (ME) and the power system (PWR) and designed to convert direct electric currents from the power system (PWR) into alternate electric currents to be supplied to the electric motor (ME) for its operation,
wherein the inverter circuit (**INV**) comprises a plurality of switches (**S**, **S1-S6**) each designed to switch between a first operating position, wherein the power system (**PWR**) and electric motor (**ME**) are connected to each other, and a second operating position, wherein the power system (**PWR**) and electric motor (**ME**) are disconnected from each other.

5. The vehicular control system (**1**) according to claim 4, in which the plurality of switches (**S**) comprises:
- first switches (**S1**, **S3**, **S5**) designed to connect a positive terminal of the power system (**PWR**) to the electric motor (**ME**); and
- second switches (**S2, S4, S6**) designed to connect a negative terminal of the power system (**PWR**) to the electric motor (**ME**).

6. The vehicular control system (**1)** of vehicular control according to claim 4**,** wherein, in order to inhibit the first phases of the electric motor (**ME**), the vehicular control system (**1**) is designed to short-circuit the first phases of the electric motor (**ME**) by switching from the first operating position to the second operating position alternately two among the first switches (**S1, S3, S5**) and the second switches (**S2, S4, S6**).

7. The vehicular control system (**1**) according to any one of claims **5** and **6**, wherein, in order to inhibit the second phases of the electric motor (**ME**), the vehicular control system (**1**) is designed to short-circuit the second phases of the electric motor (**ME**) by switching from the first operating position to the second operating position alternately one of the first switches (**S1, S3, S5**) and the second switches (**S2, S4, S6**).

8. A vehicle (**V**) with electric or hybrid propulsion comprising a vehicular powertrain (**GM**) comprising an electric traction system (**ET**) and a transmission system (**T**) interposed between the electric traction system (**ET**) and driving wheels (**W**) of the vehicle (**V**) with electric or hybrid propulsion;
the electric traction system (**ET**) comprises at least one multiphase electric motor (**ME**) and is electronically controllable to selectively operate in different operating modes comprising at least one electric mode, wherein the vehicle (**V**) with electric or hybrid propulsion is propelled by the electric motor (**ME**),
the vehicle (**V**) with electric or hybrid propulsion is designed to be in communication with a vehicular control system (**1**) for an electric traction system (**ET**) of a vehicle (**V**) with electric or hybrid propulsion according to any of the preceding claims.

9. A computer program product loadable into and executable by a vehicular control system for an electric traction system (**ET**) of a vehicle (**V**) with electric or hybrid propulsion according to any one of claims **1-7** and designed to cause, when executed, the vehicular control system (**1**) to operate in the manner claimed in any one of claims **1-7**.
